# EUROPÄISCHE PATENTANMELDUNG

(11) **EP 3 527 638 A1**
(43) Veröffentlichungstag der Anmeldung: **21.08.2019**
(21) Anmeldenummer: 18157326.2
(22) Anmeldetag: 19.02.2018
(51) Int. Cl.: C09J 5/02

(54) **KLEBEVERBINDUNG SOWIE VERFAHREN ZUR HERSTELLUNG EINER KLEBEVERBINDUNG UND SUBSTANZ FÜR EINE KLEBEVERBINDUNG**

(71) Anmelder: Bio-Circle Surface Technology GmbH, 33334 Gütersloh (DE)
(72) Erfinder: Schürer, Anne-Catrin, 33330 Gütersloh (DE); Große, Birgit, 33415 Verl (DE)
(74) Vertreter: Pellengahr, Maximilian Rudolf

(57) **Zusammenfassung**

Die Erfindung betrifft eine Klebeverbindung (1), umfassend eine Oberfläche (2) eines ersten Substrates (3), wie lackierte Oberflächen, Kunststoffoberflächen, Edelstahloberflächen, Stahl- und Holzoberflächen auf der eine hoch viskose Klebemasse (4) auftragbar ist, auf die eine weitere Oberfläche (5) eines zweiten Substrates (6), wie lackierte Oberflächen, Kunststoffoberflächen, Edelstahloberflächen, Stahl- oder Holzoberflächen ansetzbar ist, wobei nach Aushärten der viskosen Klebemasse (4) sich eine feste Verbindung zwischen den Substraten (3, 6) einstellt. Gemäß der Erfindung wird vorgeschlagen, dass sich durch Auftragen einer Substanz (7) auf den Oberflächen (2, 5) der Substrate (3, 6) eine Haftverstärkung der aufgetragenen viskosen Klebemasse (4) in Bezug zu den Substraten (3, 6) nach Aushärtung an den Oberflächen einstellt, wobei zum zerstörungsfreien und rückstandsfreien Lösen der Verbindung (1) die identische Substanz (7) ebenfalls verwendbar ist, ohne dass Klebemasse (4) auf den Oberflächen (2, 5) verbleibt.

## Beschreibung

### Technisches Umfeld

Die Erfindung betrifft eine Klebeverbindung, umfassend die Oberfläche eines ersten Substrates wie lackierte Oberflächen, Kunststoffoberflächen, Edelstahloberflächen, Stahl- und Holzoberflächen, auf die eine hoch viskose Klebemasse auftragbar ist, auf die eine weitere Oberfläche eines zweiten Substrats, wie lackierte Oberflächen, Kunststoffoberflächen, Edelstahloberflächen, Stahl- oder Holzoberflächen ansetzbar ist, wobei sich nach Aushärten der Viskosenmasse eine feste Verbindung zwischen den Substraten einstellt.

### Stand der Technik

Bei Klebeverbindungen gemäß des Standes der Technik gilt es insbesondere, die zu verbindenden Teile betreffend der zu verklebenden Oberflächen zu reinigen, damit seitens des Klebers eine gute Haftwirkung an diesen Oberflächen erreicht wird. Die Oberflächen sind hier beispielsweise von Staub oder auch von Unreinheiten, wie Rost und dergleichen zunächst zu befreien, bevor dann die Klebemasse in Form einer Kleberaupe aufgetragen wird. Ist die Kleberaupe aufgetragen, so wird dann die zweite Oberfläche angehaftet, wobei dann durch Aushärten der Klebemasse die feste Verbindung hergestellt wird.

In der Industrie werden mehr und mehr derartige Klebeverbindungen eingesetzt, da im Zuge des Automatisierungsprozesses Kleberaupen insbesondere von Robotern schnell und einfach aufgetragen werden können, wobei dann auf den aufgetragenen Bereichen entsprechend Roboter die zu verbindenden Teile ansetzen können. Bei diesen nach dem Stand der Technik bekannten Klebeverbindungen, die auch insbesondere von ihrer Haftwirkung her sehr stark ausgebildet sind, ergibt sich das Problem, dass eine derartige aufgetragene Klebeverbindung nur unter einem hohen Aufwand wieder gelöst werden kann. Dabei kommt es nicht selten vor, dass insbesondere die Haftflächen zerstört werden, sodass diese nicht wieder für eine Wiederverklebung benutzt werden können. Es ist dann erforderlich, dass beispielsweise nach Entfernen von Kleberresten die Oberfläche wieder bearbeitet werden muss, und zwar derart, dass diese geschliffen oder poliert werden muss, damit eine Haftfläche für den Neuauftrag einer Klebemasse bereit ist.

Zum Stand der Technik ist noch zu erwähnen, dass in allen Prozessen und Schritten vor dem Kleben - wie beschrieben - eine Reinigung der Oberfläche gefordert ist. Die Reinigung wird derzeit mit Alkohol, Aceton oder Kombinationen aus rückstandsfreien Reinigern durchgeführt. Nach der Reinigung kann entweder ein zusätzlicher Primer aufgetragen werden, oder aber es werden andere Zusatzschritte durchgeführt, die zu einer optimalen Klebung beitragen.

### Aufgabe

Der Erfindung stellt sich somit das Problem, eine Klebeverbindung, eine Substanz oder aber auch ein Verfahren einer Klebeverbindung bereitzustellen, welche einerseits die Haftkraft verstärkt, wobei anderseits die Möglichkeit besteht, dass sie wieder aufgelöst werden kann, ohne dass dabei Rückstände an den Haftflächen zurückbleiben.

### Lösung

Erfindungsgemäß wird dieses Problem mit den Merkmalen des Anspruchs 1, des Anspruchs 12 und des Anspruchs 13 gelöst. Vorteilhafte Ausgestaltungen der Erfindung ergeben sich jeweils aus den rückbezogenen Unteransprüchen.

Die mit der Erfindung erreichten Vorteile bestehen darin, dass unter Verwendung einer Substanz für die Klebemasse, die auf die zu verbindenden Oberflächen aufgetragen wird, zunächst eine Vorbereitung der Haftfläche erfolgt, die darin zu sehen ist, dass durch die Benetzung der Feinstrukturierung der Oberfläche, mit der die Fläche des Klebstoffs oder der Klebmasse in Verbindung tritt, verflüssigt wird. Hierbei wird die Klebermasse im Grenzoberflächenbereich derart verflüssigt, dass die Klebemasse hinsichtlich ihrer Viskosität sich so verringert, dass sie in die Mikroporenstrukturen der Oberfläche eindringen kann.

Aufgrund dieser Ausbildung wird eine Art Verzahnung zur Haftfläche im Mikrobereich geschaffen, die eine fast 100 %-ige Berührung des Klebstoffes mit dem Untergrund der Haftfläche erzielt. Hierdurch wird erreicht, dass die Haftwirkung der Klebemasse an der Oberfläche um das 8-fache erhöht wird. Will man nun diese stark haftende Klebemasse wieder von der Oberfläche entfernen, so besteht nach der Erfindung nun die Möglichkeit, dass durch Sprühen oder Auftragen der identischen Substanz auf die Klebeverbindung, diese wieder gelöst werden kann. Hierzu bewirkt die Substanz unter Kapillarwirkung, dass diese in den Klebestreifen kriecht und wieder die Klebstoffmasse im Grenzoberflächenbereich verflüssigt, sodass die Klebemasse aus der feinen Mikrostruktur der Oberfläche gelöst wird, sodass nach Diffusion des Lösemittels die Klebemasse von der Oberfläche rückstandslos und zerstörungsfrei entfernt werden kann.

In vorteilhafter Weise wird durch Verwendung der Substanz, welches ein polares Lösemittel einer definierten Zusammensetzung mit festgelegtem Mengenverhältnis umfasst, im ersten Schritt die Oberfläche gereinigt. Nach diesem Schritt bleibt ein spürbarer leichter Rückstand auf der Oberfläche. Dieser Rückstand führt dazu, dass auf den Klebebändern der vorhandenen Klebstoffmasse diese minimal an der Oberfläche gelöst wird. Dieser Prozess führt zu einer Klebekraftverstärkung zwischen Klebeband oder Raupe und der Oberfläche des Substrats. Hierbei wird in vorteilhafter Weise erreicht, dass Rückstände der Substanz als Reiniger parallel einen Klebstoffverstärker bilden. Die durch Wirkung der Substanz wesentlich niedrigere viskose Klebstoffmasse ist durch die dadurch bessere Kriechfähigkeit nun in der Lage, in die Rauhigkeiten der Oberfläche zu fließen. Durch diesen Eindringeffekt wird die Klebefläche wesentlich vergrößert, die somit größere Klebekräfte hervorruft. Die Klebekraft wird dabei in Abhängigkeit von Substrat und Klebeband doppelt bis achtfach verstärkt. Durch die Wirkung der erfindungsgemäßen Substanzflüssigkeit wird der auf dem Klebeband bzw. der Raupe befindliche Oberflächenbereich eines hoch viskosen Klebers kurzfristig verflüssigt, kriecht in die Täler der Oberfläche und härtet dort wieder aus. Dies wird durch eine kennzeichnungsfreie Mischung des definierten Lösemittels erreicht. Neben der Änderung der Viskosität des Klebers hat auch die Änderung der Polarität des Verhältnisses Klebstoff zu Substrat einen Einfluss auf die Wirkung.

Diese enorm hervorgerufenen starken Klebekräfte können zerstörungsfrei wieder gelöst werden, indem diese Lösemittel wieder auf die geklebten Oberflächen auftragen werden. Das Produkt kriecht durch Kapillarwirkung in den Klebestreifen, diffundiert zwischen die geklebten Verbindungen und löst diese wieder von der Oberfläche ab. Auch hierfür gelten die gleichen Eigenschaften und Anforderungen, wie für die Reinigung inklusive Klebekraftverstärkung.

Gemäß der Erfindung wird vorgeschlagen, dass sich durch Auftragen einer Substanz auf den Oberflächen des Substrates eine Haftverstärkung der aufgetragenen viskosen Klebemasse in Bezug zu den Substraten durch Aushärtung an den Oberflächen einstellt, wobei zum zerstörungsfreien und rückstandsfreien Lösen der Verbindung die identische Substanz ebenfalls verwendbar ist, ohne dass Klebemasse auf den Oberflächen verbleibt. In Weiterbildung ist die Substanz neben der Haftverstärkung auch zur Oberflächenreinigung des Substrates verwendbar.

Die aufgetragene Substanz beeinflusst die Kriechfähigkeit der aufgetragenen Klebermasse im Grenzoberflächenbereich der viskosen Klebemasse, sodass insbesondere diese in die mikroskopisch vorhandenen Poren oder Täler der Oberfläche kriechen.

Nach einer besonders vorteilhaften Ausgestaltung der Erfindung diffundiert die Substanz zum rückstandsfreien Lösen durch Kapillarwirkung in die Klebeverbindung und reduziert damit die Haftverstärkung, wobei sich dann die Klebemasse von der Oberfläche des Substrates löst.

Die Substanz bildet zunächst nach Auftragen einen leichten spürbaren Filmrückstand, auf den die viskose Masse aufgetragen wird. In Kontakttreten der Klebemasse mit dem Filmrückstand erfolgt die Kriechfähigkeit der Klebemasse in der Grenzschicht, die insbesondere dann in die Täler bzw. Poren der Oberfläche eindringt.

Nach einer besonders vorteilhaften Ausgestaltung der Erfindung umfasst die Substanz ein polares Lösemittel. Hierbei bewirkt die Substanz neben der Beeinflussung der Viskosität der Klebemasse auch eine Änderung der Polarität des Verhältnisses Klebemasse zu Substrat. Das polare Lösemittel umfasst hierbei eine definierte Zusammensetzung mit festgelegten Mengenverhältnissen.

Die Erfindung betrifft in gleicher Weise auch ein Verfahren zur Herstellung einer Klebeverbindung mit verstärkter Haftkraft, die sich dadurch anschließend zerstörungs- und rückstandsfrei wieder lösen lässt, wobei die Klebeverbindung die Oberfläche eines ersten Substrates, wie lackierte Oberflächen, Kunststoffoberflächen, Edelstahloberflächen, Stahl- und Holzoberflächen umfasst, auf der eine hoch viskose Klebemasse aufgetragen wird, auf die eine weitere Oberfläche eines zweiten Substrates, wie lackierte Oberflächen, Kunststoffoberflächen, Edelstahloberflächen, Stahl- oder Holzoberflächen angesetzt wird, wobei sich nach Aushärten der viskosen Klebemasse eine feste Verbindung zwischen den Substraten einstellt, wobei eine Substanz auf den Oberflächen des Substrates aufgetragen wird, die eine Haftkraftverstärkung der viskosen Klebemasse in Bezug zu den Substraten nach Aushärtung an den Oberflächen bewirkt und wobei zum zerstörungsfreien und rückstandsfreien Lösen der Verbindung identische Substanz ebenfalls verwendet wird, ohne dass Klebemasse auf den Oberflächen verbleibt. Hierbei wird die Substanz neben der Haftverstärkung auch zur Oberflächenreinigung verwendet.

Die Erfindung betrifft in gleicher Weise auch eine Substanz für einen Klebeverbinder zwischen einem ersten Substrat und einem zweiten Substrat, wie diese merkmalsgemäß in den vorgeschilderten Ausführungen beschrieben wird. Die Substanz beeinflusst die Kriechfähigkeit der aufgetragenen Klebemasse im Grenzoberflächenbereich der viskosen Klebemasse. Zum rückstandsfreien Lösen durch Kapillarwirkung diffundiert die Substanz in der Klebeverbindung und reduziert somit die Haftverstärkung, sodass sich die Klebemasse von den Oberflächen des Substrates löst.

Die Substanz bildet nach Auftrag einen leichten spürbaren Filmrückstand, auf den die viskose Klebemasse aufgetragen wird. Die Substanz umfasst ein polares Lösemittel, welches neben der Beeinflussung der Viskosität der Klebemasse auch eine Änderung der Polarität des Verhältnisses Klebemasse zu Substrat bewirkt. Hierbei umfasst das polare Lösemittel eine definierte Zusammensetzung mit festgelegten Mengenverhältnissen umfasst.

### Beschreibung der Zeichnungen

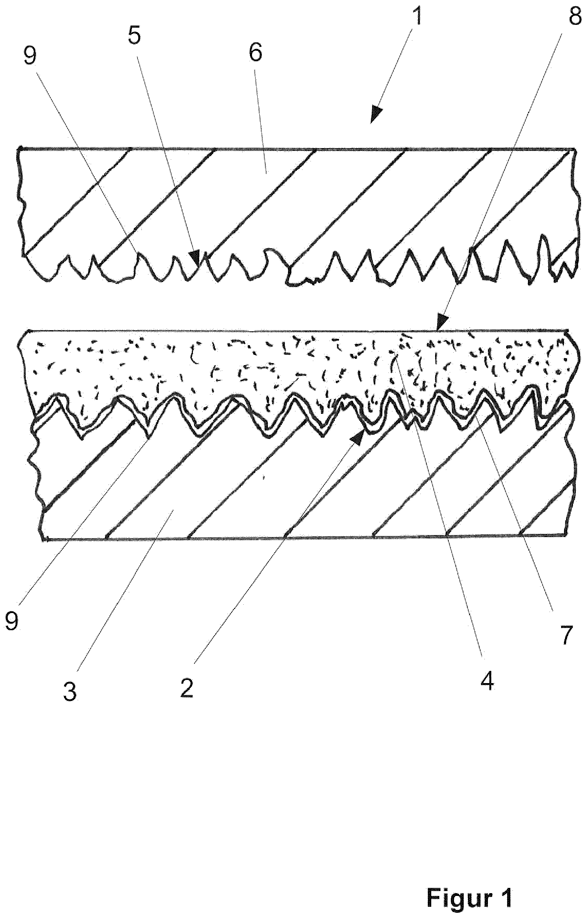

Ein Ausführungsbeispiel der Erfindung ist in der einzigen Zeichnung rein schematisch dargestellt und wird nachfolgend näher beschrieben. Es zeigt
- Figur 1: eine geschnittene Seitenansicht einer Klebeverbindung mit Mikroporenoberfläche.

### Ausführungsbeispiel

Die Klebeverbindung 1 umfasst eine Oberfläche 2 eines ersten Substrates 3, wie lackierte Oberflächen, Kunststoffoberflächen, Edelstahloberflächen, Stahl- und Holzoberflächen, auf die eine hoch viskose Klebemasse 4 auftragbar ist. Auf die Klebemasse 4 wird eine weitere Oberfläche 5 eines zweiten Substrats 6, wie lackierte Oberflächen, Kunststoffoberflächen, Edelstahloberflächen, Stahl- oder Holzflächen angesetzt, wobei nach Aushärten der viskosen Klebemasse 4 sich eine feste Verbindung zwischen den Substraten 3 und 6 einstellt.

Wie insbesondere aus der einzigen Figur erkennbar ist, stellt sich durch Auftragen einer Substanz 7 auf den Oberflächen 2 und 5 des Substrates 3 und 6 eine Haftverstärkung der aufgetragenen viskosen Klebemasse 4 in Bezug zu den Substraten 3 und 6 nach Aushärten an den Oberflächen 2 und 5 ein. Wobei zum zerstörungsfreien und rückstandsfreien Lösen der Verbindung 1 die identische Substanz 7 ebenfalls verwendbar ist, ohne dass die Klebemasse 4 auf den Oberflächen 2 und 5 verbleibt.

Hierbei ist die Substanz 7 neben der Haftverstärkung auch zur Oberflächenreinigung des Substrates 3 und 6 verwendbar. Wie insbesondere aus der geschnittenen Ansicht erkennbar ist, beeinflusst die aufgetragene Substanz 7 die Kriechfähigkeit der aufgetragenen Klebemasse 4 im Grenzoberflächenbereich 8 der viskosen Klebemasse 4. Hierbei wird die Wirkung ausgenutzt, dass aufgrund des Herabsetzens der Viskosität im Grenzoberflächenbereich 8 die Klebemasse 4 bis in die Täler 9 oder Poren der Oberfläche 2 und 5 eindringen kann, sodass dadurch eine Vergrößerung der Haftfläche in den Tälern 9 oder Poren gegeben ist. Dadurch entsteht, wie vergrößert in der Figur dargestellt, eine Art Verzahnung der Klebemasse 4 zu den Oberflächen 2, 5. Durch Diffusion der Substanz 7 und Aushärtung verstärkt sich dadurch die Klebekraft bis zum 8-fachen.

Will man nun eine derart starke Haftverbindung wieder lösen, besteht nun die Möglichkeit, dass die Substanz 7 zum rückstandsfreien Lösen durch Kapillarwirkung in die Klebeverbindung 1 diffundiert, sodass dann die Haftverstärkung wieder reduziert wird, wobei sich die Klebemasse 4 von der Oberfläche 2 und 5 des Substrates 3 und 6 löst. Die Klebemasse 4, bzw. hier im vorliegenden Fall die Kleberaupe, kann dann einfach von Hand von der Oberfläche bzw. den Oberflächen 2 und 5 abgezogen werden. Die rückstandslosen Oberflächen 2 und 5 sind dann wieder für einen weiteren Klebevorgang einsetzbar.

In Weiterbildung der Erfindung bildet die Substanz 7 nach Auftrag einen leichten spürbaren Filmrückstand. Hierbei wird die viskose Klebemasse 4 auf den Filmrückstand aufgetragen. In diesem Zustand ergibt sich insbesondere die kurzfristige Verflüssigung der Grenzschicht der Klebemasse 4, sodass dann entsprechend die Ausfüllung der Täler 9 in der Oberfläche 2 und 5 erfolgen kann.

Nach einer besonders vorteilhaften Ausgestaltung der Erfindung umfasst die Substanz 7 ein polares Lösemittel, welches neben der Beeinflussung der Viskosität der Klebemasse 4 auch eine Änderung der Polarität des Verhältnisses Klebemasse 4 zu Substrat 3, 6 bewirkt. Das polare Lösemittel umfasst hierbei eine definierte Zusammensetzung mit festgelegten Mengenverhältnissen.

### Bezugszeichenliste

- 1.: Klebeverbindung
- 2.: Oberfläche
- 3.: Substrat
- 4.: viskose Klebemasse
- 5.: weitere Oberfläche
- 6.: zweites Substrat
- 7.: Substanz
- 8.: Grenzoberflächenbereich
- 9.: Täler

## Patentansprüche

1. Klebeverbindung (1) umfassend eine Oberfläche (2) eines ersten Substrates (3), wie lackierte Oberflächen, Kunststoffoberflächen, Edelstahloberflächen, Stahl- und Holzoberflächen, auf der eine hoch viskose Klebemasse (4) auftragbar ist, auf die eine weitere Oberfläche (5) eines zweiten Substrates (6), wie lackierte Oberflächen, Kunststoffoberflächen, Edelstahloberflächen, Stahl- oder Holzoberflächen ansetzbar ist, wobei nach Aushärten der viskosen Klebemasse (4) sich eine feste Verbindung zwischen den Substraten (3, 6) einstellt,
**dadurch gekennzeichnet,**
**dass** sich durch Auftragen einer Substanz (7) auf den Oberflächen (2, 5) der Substrate (3, 6) eine Haftverstärkung der aufgetragenen viskosen Klebemasse (4) in Bezug zu den Substraten (3, 6) nach Aushärtung an den Oberflächen einstellt, wobei zum zerstörungsfreien und rückstandsfreien Lösen der Verbindung (1) die identische Substanz (7) ebenfalls verwendbar ist, ohne dass Klebemasse (4) auf den Oberflächen (2, 5) verbleibt.

2. Klebeverbindung nach Anspruch 1,
**dadurch gekennzeichnet,**
**dass** die Substanz (7) neben der Haftverstärkung auch zur Oberflächenreinigung des Substrates (3, 6) verwendbar ist.

3. Klebeverbindung nach Anspruch 1 und 2,
**dadurch gekennzeichnet,**
**dass** die aufgetragene Substanz (7) die Kriechfähigkeit der aufgetragenen Klebemasse (4) im Grenzoberflächenbereich (8) der viskosen Klebemasse (4) beeinflusst.

4. Klebeverbindung nach den Ansprüchen 1 bis 3,
**dadurch gekennzeichnet,**
**dass** die Substanz (7) zum rückstandsfreien Lösen durch Kapillarwirkung in die Klebeverbindung (1) diffundiert und die Haftverstärkung reduziert, wobei sich die Klebemasse (4) von den Oberflächen (2, 5) des Substrates (3, 6) löst.

5. Klebeverbindung nach den Ansprüchen 1 bis 4,
**dadurch gekennzeichnet,**
**dass** die Substanz (7) nach Auftrag einen leichten spürbaren Filmrückstand bildet.

6. Klebeverbindung nach den Ansprüchen 1 bis 5,
**dadurch gekennzeichnet,**
**dass** auf den Filmrückstand der Substanz (7) die viskose Klebemasse (4) aufgetragen wird.

7. Klebeverbindung nach den Ansprüchen 1 bis 6,
**dadurch gekennzeichnet,**
**dass** die Substanz (7) ein polares Lösemittel umfasst.

8. Klebeverbindung nach den Ansprüchen 1 bis 7,
**dadurch gekennzeichnet,**
**dass** die Substanz (7) neben der Beeinflussung der Viskosität der Klebemasse (4) auch eine Änderung der Polarität des Verhältnisses Klebemasse (4) zu Substrat (3, 6) bewirkt.

9. Klebeverbindung nach den Ansprüchen 1 bis 8,
**dadurch gekennzeichnet,**
**dass** das polare Lösemittel eine definierte Zusammensetzung mit festgelegten Mengenverhältnissen umfasst.

10. Verfahren zur Herstellung einer Klebeverbindung (1) mit verstärkter Haftkraft, die sich anschließend zerstörungs- und rückstandfrei wieder lösen lässt, wobei die Klebeverbindung (1) die Oberfläche (2) eines ersten Substrates (3), wie lackierte Oberflächen, Kunststoffoberflächen, Edelstahloberflächen, Stahl- und Holzoberflächen umfasst, auf der eine hoch viskose Klebemasse (4) aufgetragen wird, auf die eine weitere Oberfläche (5) eines zweiten Substrates (6), wie lackierte Oberflächen, Kunststoffoberflächen, Edelstahloberflächen, Stahl- oder Holzoberflächen angesetzt wird, wobei sich nach Aushärten der viskosen Klebemasse (4) eine feste Verbindung zwischen den Substraten (3, 6) einstellt, wobei eine Substanz (7) auf den Oberflächen (2, 5) des Substrates (3, 6) aufgetragen wird, die eine Haftverstärkung der viskosen Klebemasse (4) in Bezug zu den Substraten (3, 6) nach Aushärtung an den Oberflächen (2, 5) bewirkt, und wobei zum zerstörungsfreien und rückstandsfreien Lösen der Verbindung (1) die identische Substanz (7) ebenfalls verwendet wird, ohne dass Klebemasse auf den Oberflächen (2, 5) verbleibt.

11. Verfahren nach Anspruch 10,
**dadurch gekennzeichnet,**
**dass** die Substanz (7) neben der Haftverstärkung auch zur Oberflächenreinigung verwendet wird.

12. Substanz (7) für eine Klebeverbindung (1) zwischen einem ersten Substrat (3) wie lackierten Oberflächen, Kunststoffoberflächen, Edelstahloberflächen, Stahl- und Holzoberflächen, auf die eine hoch viskose Klebemasse (4) auftragbar ist, auf die eine weitere Oberfläche (5) eines zweiten Substrates (6), wie lackierte Oberflächen, Kunststoffoberflächen, Edelstahloberflächen, Stahl- oder Holzoberflächen ansetzbar ist, wobei nach Aushärten der viskosen Klebemasse (4) sich eine feste Verbindung zwischen den Substraten (3, 6) einstellt,
**dadurch gekennzeichnet,**
**dass** die Substanz (7) auf den Oberflächen (2, 5) des Substrates (3, 6) eine Haftverstärkung der aufgetragenen viskosen Klebemasse (4) in Bezug zu den Substraten (3, 6) nach Aushärtung an den Oberflächen (2, 5) bewirkt, wobei zum zerstörungsfreien und rückstandsfreien Lösen der Verbindung (1) die identische Substanz (7) ebenfalls verwendbar ist, ohne dass Klebemasse (4) auf den Oberflächen (2, 5) verbleibt.

13. Substanz nach Anspruch 12,
**dadurch gekennzeichnet,**
**dass** die Substanz (7) neben der Haftverstärkung auch zur Oberflächenreinigung verwendbar ist.

14. Substanz nach Anspruch 12 und 13,
**dadurch gekennzeichnet,**
**dass** die aufgetragene Substanz (7) die Kriechfähigkeit der aufgetragenen Klebemasse (4) im Grenzoberflächenbereich (8) der viskosen Klebemasse (4) beeinflusst.

15. Substanz nach den Ansprüchen 12 bis 14,
**dadurch gekennzeichnet,**
**dass** die Substanz (7) zum rückstandsfreien Lösen durch Kapillarwirkung in die Klebeverbindung diffundiert und die Klebemasse (4) von den Oberflächen (2, 5) des Substrates (3, 6) löst.

16. Substanz nach den Ansprüchen 12 bis 15,
**dadurch gekennzeichnet,**
**dass** die Substanz (7) nach Auftrag einen leichten spürbaren Filmrückstand bildet.

17. Substanz nach den Ansprüchen 12 bis 16,
**dadurch gekennzeichnet,**
**dass** auf den Fümrückstand der Substanz (7) die viskose Klebemasse (4) aufgetragen wird.

18. Substanz nach den Ansprüchen 12 bis 17,
**dadurch gekennzeichnet,**
**dass** die Substanz (7) ein polares Lösemittel umfasst.

19. Substanz nach den Ansprüchen 12 bis 18,
**dadurch gekennzeichnet,**
**dass** die Substanz (7) neben der Beeinflussung der Viskosität der Klebemasse (4) auch eine Änderung der Polarität des Verhältnisses Klebemasse (4) zu Substrat (3, 6) bewirkt.

20. Substanz nach den Ansprüchen 12 bis 19,
**dadurch gekennzeichnet,**
**dass** das polare Lösemittel eine definierte Zusammensetzung mit festgelegten Mengenverhältnissen umfasst.
